# EUROPEAN PATENT APPLICATION

(11) **EP 1 770 357 A1**
(43) Date of publication of application: **04.04.2007**
(21) Application number: 05748496.6
(22) Date of filing: 06.06.2005
(51) Int. Cl.: G01B 21/30

(54) **CIRCULARITY MEASURING INSTRUMENT**

(30) Priority: 22.07.2004 JP 2004214269
(71) Applicant: TOKYO SEIMITSU CO.,LTD., Mitaka-shi Tokyo 181-8515 (JP)
(72) Inventor: KATAMACHI, Shouzou c/o Tokyo Seimitsu Co., Ltd., Mitaka-shi, Tokyo 181-8515 (JP)
(74) Representative: Manley, Nicholas Michael
(86) International application number: PCT/JP2005/010742
(87) International publication number: WO 2006/008891

(57) **Abstract**

Problems to be solved include problems of an expense in replacing a manual type of roundness measurement apparatus with an automatic type of roundness measurement apparatus; a repair time for maintenance, overhaul or the like of the roundness measurement apparatus; a cost of a replacement component during repair; and the like.

According to the present invention, in a manual type roundness measurement apparatus comprising a measurement device which measures a state of a peripheral surface of an object to be measured; a columnar measurement base capable of adjusting a misalignment and a tilt of the object to be measured on the measurement device; and a computer calculation processing device which processes measurement data of the measurement base, the measurement base includes a driving unit having a handle; automatic unit sections comprising motor units connected to the driving unit 5a; and a substrate which controls the automatic unit sections, whereby the manual type roundness measurement apparatus can be changed to a constitution of an automatic type.

## Description

### Technical Field

The present invention relates to a roundness measurement apparatus capable of measuring a roundness of a columnar object to be measured, more particularly to a roundness measurement apparatus which can easily be remodeled from a manual type of apparatus to an automatic type of apparatus.

### Background Art

A roundness measurement apparatus is an apparatus which precisely measures a roundness of a section of a columnar object to be measured and a deviation from a perfect circle, and includes a misalignment adjustment mechanism which aligns the center of the object to be measured with the center of rotation; and a tilt adjustment mechanism which adjusts a tilt with respect to a rotary shaft of the object to be measured. There are two types of roundness measurement apparatuses: an inexpensive manual type; and an automatic type including a highly functional motor driving system.

The "roundness measurement apparatus" described in Japanese Patent Application Laid-Open No. 2001-201340 is an automatic type of apparatus, and is a roundness measurement apparatus including a mounting base on which an object to be measured is mounted, the object having a peripheral surface whose roundness is to be measured; displacement detection means for detecting a displacement of the peripheral surface of the object to be measured; rotation driving means for rotating the mounting base or the displacement detection means so that this displacement detection means detects the displacement along the peripheral surface of the object to be measured; misalignment adjustment means including a motor for misalignment adjustment which moves the mounting base in a plane crossing a rotary shaft of the rotation driving means at right angles, the misalignment adjustment means being driven by this motor to adjust a misalignment amount of the object to be measured; and the like.

However, the roundness measurement apparatus of the automatic type is expensive. When the roundness measurement apparatus of the automatic type is purchased to replace the manual type, there is a problem that a replacement expense enormously rises.

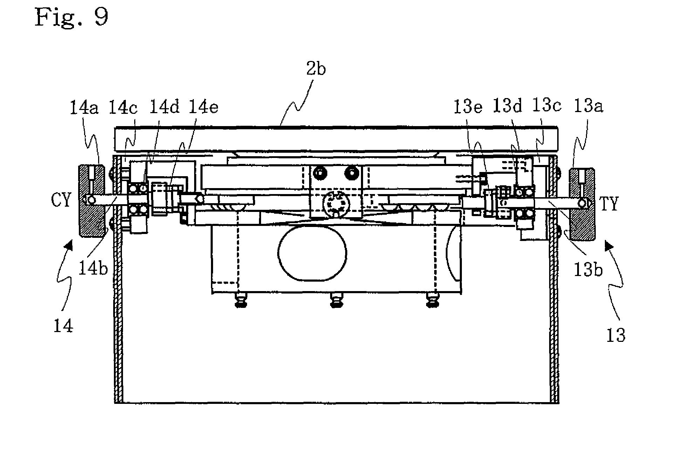

As shown in FIG. 9, the roundness measurement apparatus of the manual type includes manual units 13, 14 on left and right side surfaces of a table 2b constituting a measurement base of an object (not shown) to be measured, respectively. Handles 13a, 14a are manually turned to adjust a central position and a tilt of the object to be measured every time needed. When misalignment adjustment and tilt adjustment are all completed, measurement of a roundness or the like is possible.

The handles 13a, 14a are provided with main shafts 13b, 14b constituting shafts of the handles 13a, 14a to achieve a mechanism in which the main shafts 13b, 14b rotate simultaneously at a time when the handles 13a, 14a are turned. It is to be noted that bearings 13d, 14d and drive pins 13e, 14e are stored in handle brackets 13c, 14c.

Problems to be solved include problems of the expense in replacing the manual type of roundness measurement apparatus with the automatic type of roundness measurement apparatus; a repair time for maintenance, overhaul or the like of the roundness measurement apparatus; a cost of a replacement component during repair; and the like.

### Disclosure of the Invention

According to the present invention, in order to solve the above problems, in a roundness measurement apparatus comprising: a measurement device 1a which measures a state of a peripheral surface of an object 3 to be measured; a columnar measurement base 2 which adjusts a misalignment and a tilt of the object 3 to be measured on the measurement device 1a; and a computer calculation processing device 1b which processes measurement data of the measurement base 2, the measurement base 2 is provided therein with a driving unit 5a including a handle; automatic unit sections 4, 5 including motor units 6, 7 connected to the driving unit 5a; and a substrate 9 which controls the automatic unit sections 4, 5, whereby the roundness measurement apparatus can be changed to a constitution of an automatic type.

### Brief Description of the Drawings

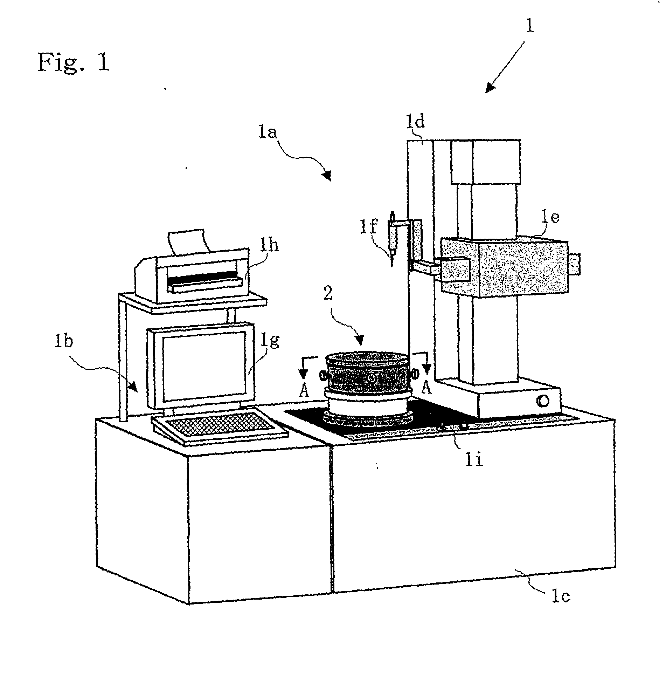

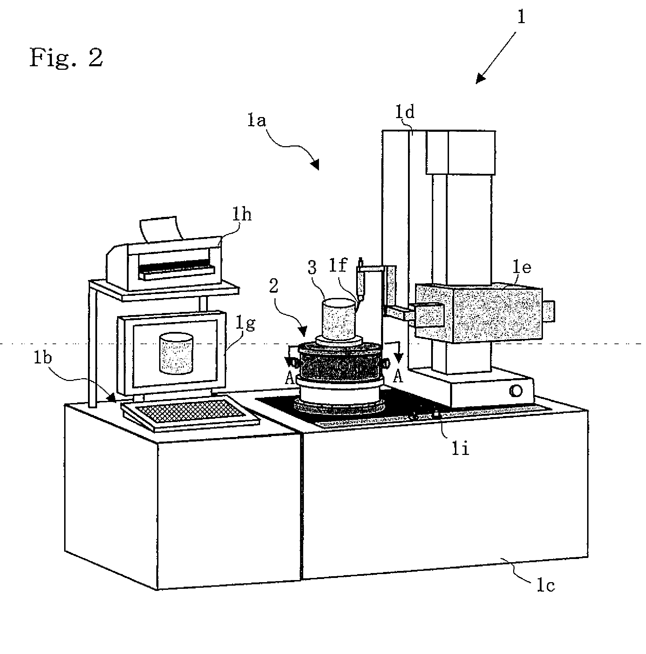

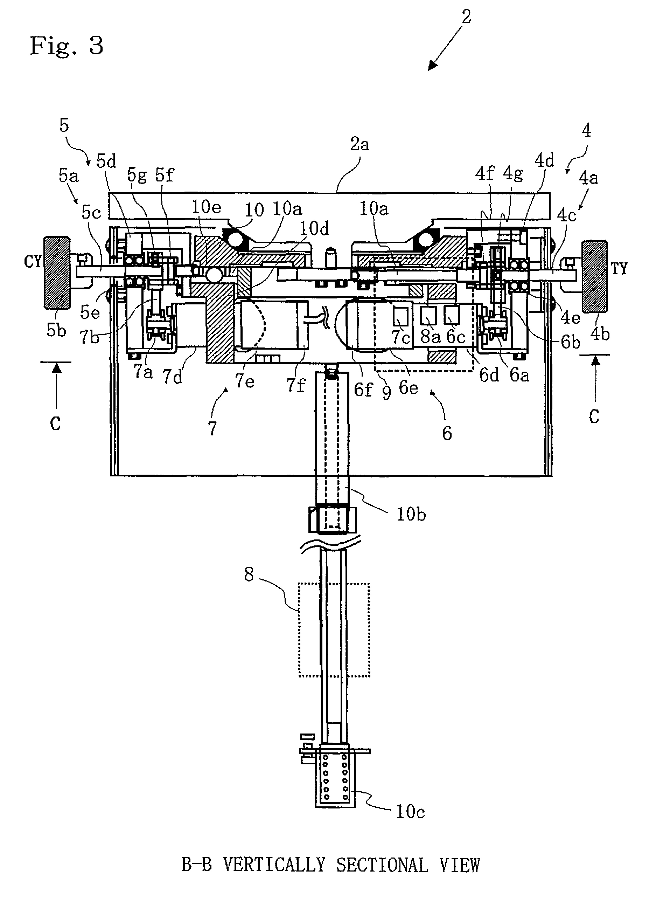

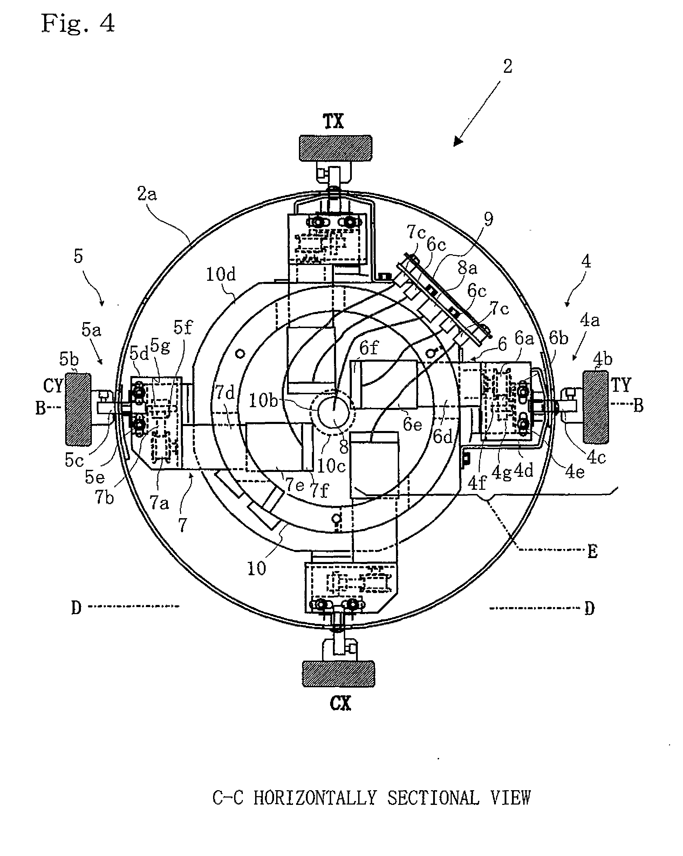

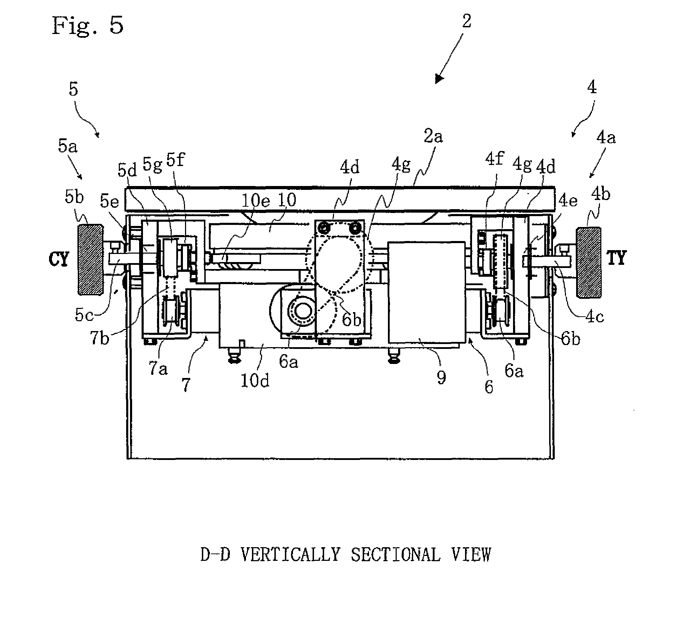

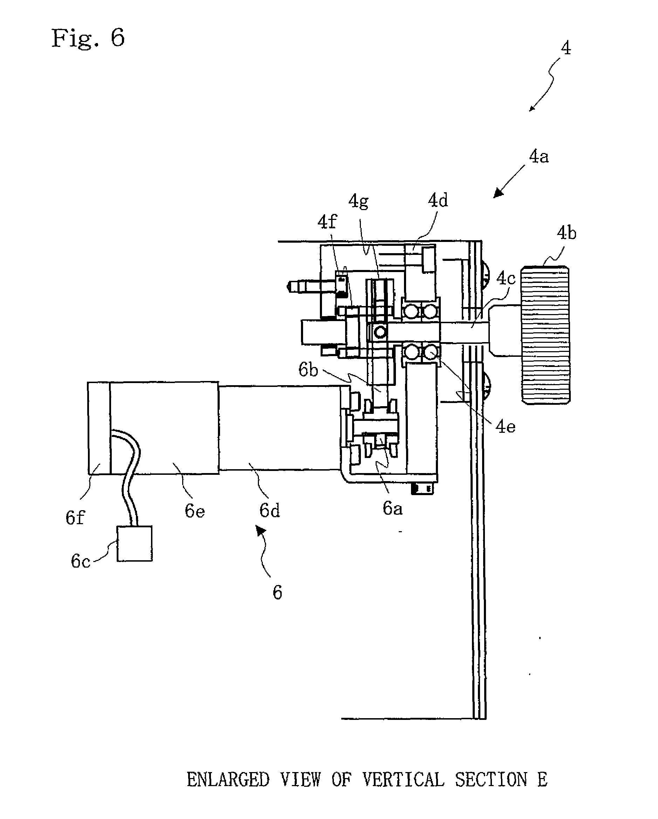

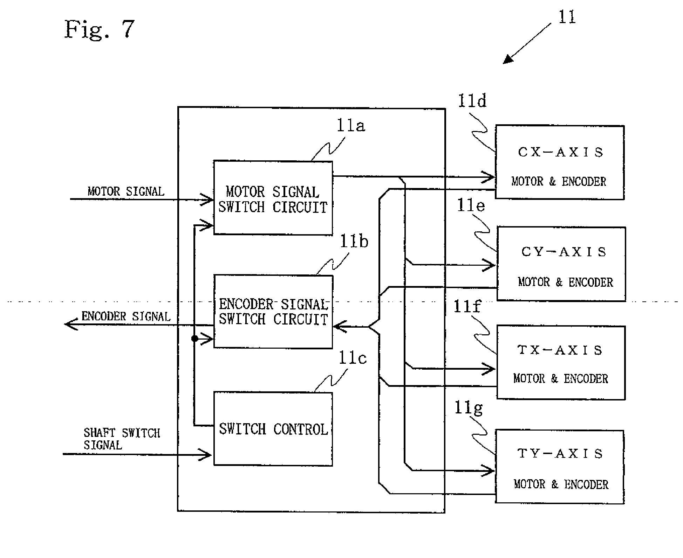

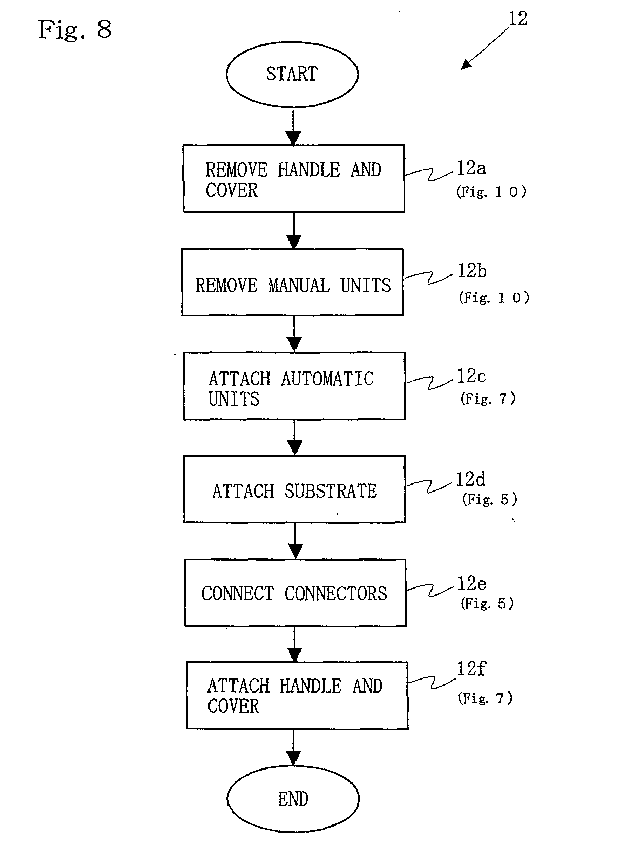

FIG. 1 is an entire perspective view showing a roundness measurement apparatus of the present invention; FIG. 2 is an entire perspective view showing the roundness measurement apparatus of the present invention during measurement; FIG. 3 is a vertically sectional view cut along the B-B line of a measurement base in the roundness measurement apparatus of the present invention; FIG. 4 is a horizontally sectional view cut along the C-C line of the measurement base of the roundness measurement apparatus of the present invention; FIG. 5 is a vertically sectional view cut along the D-D line of the measurement base of the roundness measurement apparatus of the present invention; FIG. 6 is an enlarged view of a vertical section E showing an automatic unit section disposed in the measurement base constituting the roundness measurement apparatus of the present invention; FIG. 7 is a block diagram of a motor changeover substrate of the roundness measurement apparatus of the present invention; FIG. 8 is a flow chart of the roundness measurement apparatus of the present invention; and FIG. 9 is a vertically sectional view showing an upper part of a table in a manual roundness measurement apparatus of a prior invention.

### Best Mode for Carrying out the Invention

A roundness measurement apparatus of the present invention will hereinafter be described in detail with reference to the accompanying drawings.

FIG. 1 is an entire perspective view showing the roundness measurement apparatus of the present invention; FIG. 2 is an entire perspective view showing the roundness measurement apparatus of the present invention during measurement; and FIG. 3 is a vertically sectional view cut along the B-B line of a measurement base in the roundness measurement apparatus of the present invention.

FIG. 1 shows an automatic type of roundness measurement apparatus 1 in which an automatic unit is incorporated. As shown in FIGS. 1 to 3, the roundness measurement apparatus 1 of the present invention includes a measurement device 1a which measures a state of a peripheral surface of an object 3 to be measured; a columnar measurement base 2 capable of adjusting a misalignment and a tilt of the object 3 to be measured on the measurement device 1a; and a computer calculation processing device 1b which processes measurement data of the measurement base 2. In the roundness measurement apparatus, the measurement base 2 is easily attachably/detachably provided therein with driving units 4a, 5a including handles 4b, 5b; automatic unit sections 4, 5 including motor units 6, 7 connected to the driving units 4a, 5a; and a substrate 9 which controls the automatic unit sections 4, 5 according to a procedure of a flow chart 12 which is replacement means, whereby the roundness measurement apparatus can be changed to a constitution of the automatic type. It is to be noted that a base 1c is provided with an operating section 1i which can be connected to the computer calculation processing device 1b to control the measurement device 1a and the measurement base 2.

The measurement device 1a includes a support section 1d, a movable arm 1e and a detector 1f. The support section 1d supports the movable arm 1e, and the movable arm 1e vertically moves along the support section 1d. A distal end of the movable arm 1e is provided with the detector 1f. When a height of the movable arm 1e is determined and the movable arm 1e is horizontally slid, a position of the detector 1f can be adjusted.

The measurement base 2 is a columnar base, and is automatically rotated by the motor units or the like. The peripheral surface of the measurement base 2 is provided with two handles 5b on a misalignment mechanism side (C) and two handles 4b on a horizontal tilt adjustment mechanism side (T) which are replaced according to the present invention. An inner structure of the measurement base 2 in an A-A arrow direction will be described in detail with reference to FIG. 3 and the subsequent drawings.

The computer calculation processing device 1b includes a display 1g which outputs and displays results of control of the whole measurement base 2 and measurement of a roundness; a printer 1h which prints on paper or the like the measurement result; and the like.

The measurement data measured by the measurement device 1a is taken in a storage device (a memory) of the computer calculation processing device 1b, and calculated by a central processing unit (CPU). A result of the calculation is displayed in the display 1g, and the displayed measurement result is output via the printer.

That is, the roundness measurement apparatus 1 includes the measurement device 1a in which the movable arm 1e moves along the support section 1d disposed on the base 1c so that the detector 1f disposed on the distal end of the movable arm 1e measures the state of the peripheral surface of the object 3 to be measured; the substantially columnar measurement base 2 to which the unit including the handle 5b to adjust a position of the center and the handle 4b to adjust a horizontal tilt is attached and which is rotated by a motor 8; and the computer calculation processing device 1b which processes the measurement data. While the measurement base 2 having the object 3 to be measured mounted thereon rotates, the measurement device 1a measures the roundness of the object 3 to be measured, and the computer calculation processing device 1b displays the result in the apparatus.

As shown in FIG. 2, when the columnar object 3 to be measured is mounted on the measurement base 2, the detector 1f of the measurement device 1a can measure the roundness of the object 3 to be measured. Specifically, while the measurement base 2 is rotated, the peripheral surface of the object 3 to be measured is traced with the detector 1f to measure a concave/convex degree of the peripheral surface. Therefore, the object 3 to be measured is vertically disposed while the center of the object 3 to be measured is aligned with the center of a rotary shaft of the measurement base 2.

In a case where the object 3 to be measured deviates from the position of the center of the measurement base 2 or tilts, the object is brought into an overscale state in excess of a measurable range of the detector 1f. Especially, in a case where highly sensitive measurement is performed, the measurable range narrows, and the misalignment or the tilt is therefore adjusted beforehand.

As a result of the measurement, the central processing unit of the computer calculation processing device 1b calculates the position of the center and the tilt based on the first measurement data, and a result of comparison investigation can be displayed in a monitor. Next, details of the automatic unit sections 4, 5 as the center of the roundness measurement apparatus 1 of the present invention will be described with reference to FIG. 3.

As shown in FIG. 3, the measurement base 2 includes a table 2a and a rotary power section (not shown). Moreover, in the measurement base 2, a plurality of handles and the like are arranged, and the automatic unit sections 4, 5 are arranged in a central direction of the table 2a.

The automatic unit sections 4, 5 include the driving units 4a, 5a, the motor units 6, 7 connected to the driving units 4a, 5a, the substrate 9 which controls the motor units 6, 7 and the like.

Under the table 2a, a tube 10b is disposed in which wiring lines of the automatic unit sections 4, 5 and the like are stored, and the tube 10b extends to a slip ring 10c. It is to be noted that the rotary power section generates a power which rotates the table 2a.

The table 2a shows that the automatic unit sections 4, 5 or manual units 13, 14 are arranged under a seat 10 of a main body. The seat 10 is disposed in the main body of the table 2a so that the position of the center or the tilt of the table 2a can be adjusted. As shown in the right side of FIG. 3, the automatic unit section 4 includes an adjustment mechanism (TY) which adjusts the tilt in a horizontal direction. The automatic unit section 5 disposed on the left side includes an adjustment mechanism (CY) which adjusts the position in the horizontal direction.

It is to be noted that an adjustment mechanism (TX) to adjust the tilt in a vertical direction is disposed on a proximal side, and an adjustment mechanism (CX) to adjust the position in the horizontal direction is disposed on a distal side. The substrate 9 may be attached to a side surface of a support base 10d. Next, details of the driving units 4a, 5a and the motor units 6, 7 will be described.

The automatic unit section 4 constituting the present invention includes (1) a plurality of driving units 4a; and (2) the motor unit 6 connected to (1) the driving units 4a.

The driving unit 4a is constituted of the handle 4b; a main shaft 4c connected to a central axis of the handle 4b; an L-shaped handle bracket 4d which covers the main shaft 4c; a bearing 4e which connects the main shaft 4c to the handle bracket 4d; and a pulley 4g disposed on a distal end of the main shaft 4c, having a concave/convex peripheral surface and including a plurality of protruding drive pins 4f.

One motor unit 6 is a cylindrical device constituted of a pulley 6a connected to a belt 6b extended from the pulley 4g of the driving unit 4a, a reducer 6d which decelerates the pulley 6a, a motor 6e, an encoder 6f and the like.

The automatic unit section 5 is similarly constituted of the handle 5b, a main shaft 5c, a handle bracket 5d, a bearing 5e, a drive pin 5f, a pulley 5g, the motor unit 7, a pulley 7a, a belt 7b, a motor connector 7c, a reducer 7d, a motor 7e, an encoder 7f and the like. Next, positions where the automatic unit sections 4, 5 are to be attached will be described with reference to sectional views of FIGS. 4 to 6.

FIG. 4 is a horizontally sectional view cut along the C-C line of the measurement base in the roundness measurement apparatus of the present invention; FIG. 5 is a vertically sectional view cut along the D-D line of the measurement base in the roundness measurement apparatus of the present invention; and FIG. 6 is an enlarged view of a vertical section E showing an automatic unit section disposed in the measurement base constituting the roundness measurement apparatus of the present invention.

FIG. 4 is the horizontally sectional view cut along the C-C line, and is a diagram of the measurement base 2 as viewed from a bottom portion along the C-C arrow shown in the vicinity of the handles 4b, 5b of FIG. 3.

It is to be noted that the substrate 9 can be attached to an obliquely upper right position of the support base 10d in order to control the automatic unit sections 4, 5. The support base 10d is a concave member, and the support base 10d can easily be attached via a screw or the like.

Moreover, opposite left and right side surfaces of the seat 10 have a mechanism to connect, to the substrate 9, motor connectors 6c, 7c extended from the respective motor units 6, 7 in order to control operations of the motor units 6, 7 in a position between the upper automatic unit section 4 (TX) and the right automatic unit section 4 (TY).

Furthermore, since the substrate 9 is connected to a connector (not shown) extended from the slip ring 10c of the rotary power section, the substrate can supply a power to the motor units 6, 7 and exchange information with respect to the operating section 1i and the computer calculation processing device 1b.

FIG. 5 is a diagram of the measurement base 2 shown in FIG. 4 as viewed from the right automatic unit section 4 (TX). It is shown that the automatic unit section 4 (TY) is disposed on the right side and that the automatic unit section 5 (CY) is disposed on the left side. The automatic unit section 4 is constituted of the driving units 4a, 5a including the handles 4b, 5b and the like, and the motor units 6, 7.

To rotate the handle 4b with the motor unit 6, an end of the belt 6b may be put on the pulley 6a of the motor unit 6, and the other end of the belt 6b may be put on the pulley 4g disposed on the distal end of the main shaft 4c.

The main shaft 4c constituting the driving unit 4a shown in FIG. 5 has a mechanism to adjust the rotation of the handle 4b, and is a shaft capable of transmitting the power to a plurality of movable members 10a via the main shaft 4c. When the handle 4b is rotated, a guide 10e pressed by a spring or the like (not shown) beforehand can easily displace positions of the movable members 10a including therein rotatable hard balls, and easily change the tilt from the seat 10 to the table 2a.

FIG. 6 shows an inner structure of the automatic unit section 4 constituting the roundness measurement apparatus of the present invention. It is to be noted that the automatic unit section 5 has the same inner structure. The automatic unit section 4 is constituted of the driving unit 4a and the motor unit 6.

The driving unit 4a is constituted of the handle 4b, the main shaft 4c, the handle bracket 4d, the bearing 4e, the drive pin 4f and the pulley 4g. The main shaft 4c provided with the handle 4b protrudes from the handle bracket 4d, and can be attached or detached together with the handle bracket 4d with respect to the table 2a of the measurement base 2.

The handle 4b has a substantially columnar shape in a front view, and a non-slip concave/convex portion is disposed on the peripheral surface of the handle 4b. It is to be noted that the handle 4b is connected to the main shaft 4c. The handle bracket 4d is a frame member to which the handle 4b is to be fixed, and contains therein the bearing 4e, the drive pin 4f and the pulley 4g.

The bearing 4e is a bearing for preventing falling of the main shaft 4c and fixing the main shaft 4c into the handle bracket 4d. The bearing 4e rotates the main shaft 4c. The drive pin 4f is a member to fix the automatic unit section 4 so that the automatic unit section 4 does not come off when connected to the table 2a. During the connecting, the drive pin 4f can be fitted into a hole for the drive pin.

The pulley 4g is a pulley attached to the main shaft 4c to rotate together with the main shaft 4c. The main shaft 4c passes through the center of the pulley 4g, and a side surface of the pulley is provided with a concave/convex portion on which the belt 6b is to be put. Next, details of the motor unit 6 constituting the automatic unit section 4 will be described.

On the other hand, in the motor unit 6, a wiring line is extended from the motor 6e to the motor connector 6c. The pulley 6a has the same structure as that of the pulley 4g. A rotary shaft of the motor unit 6 passes through the center of the pulley, and a peripheral surface of the pulley is provided with a concave/convex portion on which the belt 6b is to be put.

Moreover, the belt 6b extended from the pulley 4g of the driving unit 4a is put on the above concave/convex portion of the pulley attached to the rotary shaft of the motor unit 6, and the pulley has a mechanism to rotate together with the motor unit 6. The belt 6b is made of a synthetic rubber such as chloroprene rubber.

Furthermore, the motor connector 6c is connected to the encoder 6f, and a distal end of the connector is connected to the substrate 9. The substrate 9 can supply the power for driving the motor unit 6 and control the operation of the motor unit 6.

The encoder 6f is a device which encodes a signal and which is attached to a lower portion of the motor unit 6 to control the operation of the motor unit 6. During adjustment, the encoder detects an adjustment amount due to the rotation while supplying the power to the motor unit 6, and stops the rotation of the motor unit 6, when a value to be adjusted is reached.

It is to be noted that the reducer 6d and the motor 6e connected to the encoder 6f are commercially available components, and detailed description thereof is therefore omitted. Next, details of a block diagram (11) constituting the inside of the substrate 9 which performs switching to the motor unit 6 will be described.

FIG. 7 is a block diagram showing a motor changeover substrate of the roundness measurement apparatus of the present invention. As shown in the block diagram 11, in the substrate 9, there are a motor signal switch circuit 11a, an encoder signal switch circuit 11b and an electronic circuit of switch control 11c.

The motor signal switch circuit 11a receives a motor signal from the operating section 1i or the computer calculation processing device 1b to issue a command for operating or stopping motors to a motor and encoder 11d (CX), a motor and encoder 11e (CY), a motor and encoder 11f (TX) and a motor and encoder 11g (TY).

The encoder signal switch circuit 11b detects adjustment amounts from the encoders of the motor and encoder 11d (CX), the motor and encoder 11e (CY), the motor and encoder 11f (TX) and the motor and encoder 11g (TY), and the circuit sends an encoder signal to the operating section 1i or the computer calculation processing device 1b.

The switch control 11c receives a shaft switch signal from the operating section 1i or the computer calculation processing device 1b to instruct changing of an object to be operated. In a case where the adjustment of the central position is switched from the vertical direction to the horizontal direction, an instruction is issued to the motor signal switch circuit 11a to stop the motor and encoder 11d (CX) and operate the motor and encoder 11e (CY).

Moreover, an instruction is also issued to the encoder signal switch circuit 11b to change adjustment so that the detecting of the adjustment amount from the motor and encoder 11d (CX) is stopped and the adjustment amount is detected from the motor and encoder 11e (CY).

Similarly, in a case where the adjustment of the tilt is switched from the horizontal direction to the vertical direction, the adjustment is changed so as to stop the motor and encoder 11g (TY), operate the motor and encoder 11f (TX), stop the detecting of the adjustment amount from the motor and encoder 11g (TY) and detect the adjustment amount from the motor and encoder 11f (TX).

Next, with reference to FIG. 8, there will be described details of a flow chart showing a flow until an automatic unit (not shown) is incorporated in a roundness measurement apparatus of a conventional manual type in the roundness measurement apparatus of the present invention.

FIG. 8 shows a flow chart 12 showing replacement means for arranging the automatic unit sections 4, 5 in the measurement base constituting the roundness measurement apparatus of the manual type so that the apparatus can be changed to the roundness measurement apparatus 1 of the automatic type constituting the present invention. The roundness measurement apparatus of the manual type can be changed to the automatic unit sections 4, 5 by the flow chart 12 constituting the replacement means.

The flow chart 12 is constituted of a step of starting; a step 12a of removing a handle and a cover; a step 12b of removing the manual units; a step 12c of attaching the automatic units; a step 12d of attaching the substrate; a step 12e of connecting the connectors; a step 12f of removing the handle and the cover; and a step of ending. It is to be noted that in a case where the automatic unit sections 4, 5 constituting the present invention are attached to the roundness measurement apparatus of the manual type, dimensions of the automatic unit sections 4, 5 are set beforehand to be equal to those of the manual units 13, 14.

As shown in FIG. 8, in the step 12a of removing the handle and cover constituting the present invention, a conventional handle 13a and a cover (not shown) attached to the roundness measurement apparatus of the manual type shown in FIG. 9 are removed.

Moreover, in the next step 12b of removing the manual units, all of the four manual units 13, 14 are removed. Next, the step 1c of the attaching the automatic units is performed to change the apparatus to the roundness measurement apparatus 1 of the automatic type.

In the step 12c of attaching the automatic units, the motor units 6, 7 constituting the newly arranged automatic unit sections 4, 5, and the driving units 4a constituting the automatic unit sections 4, 5 are attached. After the above step 12c of attaching the automatic units ends, the step 12d of attaching the substrate is performed in order to control the automatic unit sections 4, 5.

It is assumed that in the step 12d of attaching the substrate, the step 12e of connecting the connectors is simultaneously performed. In the step 12e of connecting the connectors to the substrate 9, the motor connectors 6c, 7c and the like constituting the driving units 4a, 5a and the like are connected to the substrate 9, respectively.

It is to be noted that a power source of the motor units 6, 7 can be obtained from the outside via the substrate 9. Moreover, after the step 12e of connecting the connectors ends, the step 12f of attaching the handle and the cover is again performed to complete the flow, and the manual type of roundness measurement apparatus of the present invention can be changed to the automatic type of roundness measurement apparatus 1.

Moreover, the substrate 9 of the roundness measurement apparatus 1 can appropriately be replaced with a version-upgraded substrate. Therefore, even in a case where the apparatus provided with the manual units 13, 14 is purchased, when the automatic unit sections 4, 5 and the substrate 9 are attached later, the manual type of roundness measurement apparatus 1 can easily be changed to the automatic type of roundness measurement apparatus.

### Industrial Applicability

Since the present invention is constituted as described above, the following effects can be obtained.

First, since a conventional manual unit is removed from a manual type of roundness measurement apparatus and a new automatic unit section can be attached to replace the unit, a replacement cost of the roundness measurement apparatus can be reduced, and it is possible to select an apparatus having an optimum material without any waste in accordance with a purpose at a time of the purchase. Therefore, it is possible to select the roundness measurement apparatus having an optimum function without any waste in accordance with the purpose at the time of the purchase.

Secondly, since the manual type is provided with the automatic type of automatic unit section, the roundness measurement apparatus changed from the manual type to the automatic type preferably has less components, an inner structure is simplified, and maintenance or the like can therefore easily be performed.

Thirdly, in the manual type, a skill degree of a skilled engineer or the like is required during measurement of an object to be measured, but since the type can simply be changed to the automatic type, troubles and expenses can be reduced during the change to the automatic type. After the change to the automatic type, any skill degree of the skilled engineer is not required for measurement of a roundness.

## Claims

1. A manual type roundness measurement apparatus comprising: a measurement device which measures a state of a peripheral surface of an object to be measured; a columnar measurement base which adjusts a misalignment and a tilt of the object to be measured on the measurement device; and a computer calculation processing device which processes measurement data of the measurement base, wherein the measurement base includes a driving unit having a handle; automatic unit sections comprising motor units connected to the driving unit; and a substrate which controls the automatic unit sections, whereby the manual type is changed to an automatic type.
